# EUROPEAN PATENT SPECIFICATION

(11) **EP 4 681 101 B1**
(45) Date of publication and mention of the grant of the patent: **25.11.2026**
(21) Application number: 23723930.6
(22) Date of filing: 03.05.2023
(51) Int. Cl.: G06F 21/57

(54) **VERIFYING DATA REPRESENTING ATTESTATION EVIDENCE FOR A PLATFORM**
ÜBERPRÜFUNG VON DATEN ZUR DARSTELLUNG VON BESCHEINIGUNGEN FÜR EINE PLATTFORM
VÉRIFICATION DE DONNÉES REPRÉSENTANT UNE PREUVE D'ATTESTATION POUR UNE PLATEFORME

(43) Date of publication of application: 21.01.2026
(73) Proprietor: Huawei Technologies Co., Ltd., Shenzhen, Guangdong 518129 (CN)
(72) Inventor: NIEMI, Arto, 80992 Munich (DE); SOVIO, Sampo, 80992 Munich (DE)
(74) Representative: Pfenning, Meinig & Partner mbB
(86) International application number: PCT/EP2023/061708
(87) International publication number: WO 2024/227510

(56) References cited:
- US-A1- 2018 287 802
- US-A1- 2020 287 890
- US-A1- 2022 116 387
- SYED TOQEER ALI ET AL: "Providing efficient, scalable and privacy preserved verification mechanism in remote attestation", 2016 INTERNATIONAL CONFERENCE ON INFORMATION AND COMMUNICATION TECHNOLOGY (ICICTM), IEEE, 16 May 2016 (2016-05-16), pages 236 - 245, XP033083227, DOI: 10.1109/ICICTM.2016.7890807

## Description

### TECHNICAL FIELD

The present disclosure relates, in general, to verifying data representing attestation evidence for a platform, and in particular to a verification apparatus, an apparatus for a relying party, and a machine-readable storage medium. Aspects relate to an apparatus and process in which a verifier can verify a subset of attestation claims in evidence and replace them with a non-finalized hash state that covers all thus far processed claims.

### BACKGROUND

Remote attestation (RA) is the presentation of cryptographically verifiable evidence regarding the state of software and/or the platform on which the software runs. The evidence contains attestation claims that may allow the trustworthiness of a component to be evaluated. Typical attestation claims include binary code hashes, version numbers, identifiers, etc. The entity that presents the evidence is called the attester and the entity that verifies and appraises the evidence is called the verifier. To authenticate and to protect the attestation claims, the attester signs the evidence using an attestation private key. The verifier verifies the signature, appraises the attestation claims, and produces an attestation result. Finally, the entity that relies on the attestation result to make a trust decision is called the relying party.

RA is commonly used to ensure that a device has loaded secure software and that the software has not been tampered with. Another common use of RA is to ensure that client software is running on an authentic device, before it is allowed to access an online service. This latter goal is typically achieved by including a unique device identifier in the attestation claims, or by deterministically deriving the attestation evidence signing private key from a device unique secret. Both methods allow the verifier to find out the exact device identity.

It is a well-known problem that remote attestation (RA) may violate a user's privacy, since RA allows verifiers (and sometimes attackers who are eavesdropping on the evidence delivery channel) to find out the device identity by examining the attestation claims. A major problem is that handheld devices are often personal devices, i.e., used only by one person. Thus, identifying the exact device that is accessing a service may also identify the user.
US 2022/116387 A1 discloses a remote attestation mode negotiation method and apparatus.
US2020/287890 A1 discloses an anonymous attestation cryptographic protocol for enabling a target to attest to a predetermined property of the device without needing to reveal its identity to a verifier.
US 2018/287802 A1 discloses a method for providing instructions to cause a computing device to establish a portion of a memory of the computing device as a trusted execution environment and execute a trusted third party application within the trusted execution environment.
SYED TOQEER ALI ET AL: "Providing efficient, scalable and privacy preserved verification mechanism in remote attestation", 2016 INTERNATIONAL CONFERENCE ON INFORMATION AND COMMUNICATION TECHNOLOGY (ICICTM), IEEE, 16 May 2016 (2016-05-16), pages 236 - 245, XP033083227, DOI: 10.1109/ICICTM.2016.7890807, discloses an efficient, scalable and privacy preserved mechanism to tackle the scalability of all these kinds of verifications.

### SUMMARY

The above mentioned problems are solved by the first verification apparatus, the apparatus for a relying party, and machine-readable storage medium according to the claims. An objective of the present disclosure is to enable appraisal of remote attestation evidence by multiple verifiers, such that the privacy of the attester is preserved to largest possible extent and only a minimal amount of information about the attester is revealed to each verifier.

The foregoing and other objectives are achieved by the features of the independent claims.

Further implementation forms are apparent from the dependent claims, the description and the Figures.

The invention is set out in the appended set of claims. A first aspect of the present disclosure provides a first verification apparatus for verifying data representing attestation evidence for a platform, the first verification apparatus configured to receive, from a relying party comprising an entity making a trust decision in relation to the platform on the basis of an attestation result, first evidence comprising a cryptographically signed first set of data, the first set of data comprising a random challenge in the form of a nonce, a first set of multiple unverified attestation claims in relation to the platform, and the total length of the first set of multiple attestation claims, verify one or more unverified attestation claims from the first set of multiple unverified attestation claims to generate a first verified attestation claim for the platform, generate a first hash value based on the first verified attestation claim for the platform, wherein the first hash value comprises a representation of a state of a cryptographic hash algorithm. and generate second evidence comprising the random challenge, a second set of multiple attestation claims in relation to the platform, and the total length of the second set of multiple attestation claims, wherein the second set of multiple attestation claims comprises the first set of multiple unverified attestation claims in which the first hash value is provided in place of the first verified attestation claim.

Accordingly, a verifier (e.g., a first verification apparatus) only verifies a subset of the attestation claims in evidence, and replaces them with a non-finalized hash state that covers all thus far processed claims. Subsequent verifiers (e.g., a second verification apparatus) will not learn the attestation claims that have already been processed, improving privacy.

Each verifier can still use the same attester signature to verify the evidence. An attester does not need to generate any extra signatures or perform per-verifier asymmetric cryptographic operations.

In an implementation of the first aspect, the first verification apparatus can select the first unverified attestation claim from the first set of multiple unverified attestation claims by selecting an unverified attestation claim starting from a smallest offset in the first evidence pointing to an unverified attestation claim. The first verification apparatus can possess or have access to a public cryptographic key of the relying party and an attesting entity, and/or a public cryptographic key of an attesting entity or a trust anchor for the public key of the attesting entity. The first verification apparatus can verify the cryptographic signature of the first evidence. The first verification apparatus can generate the first hash value by applying a cryptographic hash function configured to incrementally generate hash values.

A second aspect of the present disclosure provides an apparatus for a relying party, wherein the relying party comprises an entity making a trust decision in relation to a platform on the basis of an attestation result, the apparatus configured to transmit a challenge to an attestation apparatus, wherein the challenge comprises a nonce, receive, from the attestation apparatus, an attestation result comprising first evidence comprising a cryptographically signed first set of data, the first set of data comprising the random challenge, a first set of multiple unverified attestation claims in relation to the platform, and the total length of the first set of multiple attestation claims. transmit the first evidence to a first verification apparatus, receive, from the first verification apparatus or a second verification apparatus, a set of partial attestation results representing verified claims of the first set of multiple unverified attestation claims in relation to the platform, and combine the set of partial attestation results to form an attestation result for the platform.

In an implementation of the second aspect, the apparatus can verify a signature of the set of partial attestation results. The apparatus can transmit the first evidence to a second verification apparatus. Each unverified attestation claim of the first set of multiple unverified attestation claims can be provided for respective different verification apparatuses.

A third aspect of the present disclosure provides a machine-readable storage medium encoded with instructions for verifying data representing attestation evidence for a platform at a first verification apparatus, wherein the first verification apparatus comprises a processor, the instructions executable by the processor, whereby to cause the first verification apparatus to receive, from a relying party comprising an entity making a trust decision in relation to the platform on the basis of an attestation result, first evidence comprising a cryptographically signed first set of data, the first set of data comprising a random challenge in the form of a nonce, a first set of multiple unverified attestation claims in relation to the platform, and the total length of the first set of multiple attestation claims, verify one or more unverified attestation claims from the first set of multiple unverified attestation claims to generate a first verified attestation claim for the platform, generate a first hash value based on the first verified attestation claim for the platform, wherein the first hash value comprises a representation of a state of a cryptographic hash algorithm, and generate second evidence comprising the random challenge, a second set of multiple attestation claims in relation to the platform, and the total length of the second set of multiple attestation claims, wherein the second set of multiple attestation claims comprises the first set of multiple unverified attestation claims in which the first hash value is provided in place of the first verified attestation claim.

In an implementation of the third aspect, the machine-readable storage medium can be encoded with further instructions, whereby to cause the first verification apparatus to select the first unverified attestation claim from the first set of multiple unverified attestation claims by selecting an unverified attestation claim starting from a smallest offset in the first evidence pointing to an unverified attestation claim. The machine-readable storage medium can be encoded with further instructions, whereby to cause the first verification apparatus to verify the cryptographic signature of the first evidence. The machine-readable storage medium can be encoded with further instructions, whereby to cause the first verification apparatus to generate the first hash value by applying a cryptographic hash function configured to incrementally generate hash values. The machine-readable storage medium can be encoded with further instructions, whereby to cause the first verification apparatus to select a first unverified attestation claim from the first set of multiple unverified attestation claims on the basis of a relationship of the first unverified attestation claim to the platform. The machine-readable storage medium can be encoded with further instructions, whereby to cause the first verification apparatus to determine whether the first unverified attestation claim from the first set of multiple unverified attestation claims relates to a trustworthy configuration.

These and other aspects of the invention will be apparent from the embodiment(s) described below.

### BRIEF DESCRIPTION OF THE DRAWINGS

In order that the present disclosure may be more readily understood, embodiments will now be described, by way of example, with reference to the accompanying drawings, in which:
Figure 1 is a schematic representation of a message flow comprising a pair of verifiers, according to an example;
Figure 2 is a schematic representation of a cryptographic process showing how a hash function operates according to an example;
Figure 3 is a schematic representation of a message flow comprising a pair of verifiers, according to an example; and
Figure 4 is a schematic representation of a machine according to an example.

### DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof. The term "and/or" is only an association relationship for describing associated objects and represents that three relationships may exist such that A and/or B may indicate that A exists alone, A and B exist at the same time, or B exists alone. The character "/" generally represents that the associated objects are in an "or" relationship.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

The following contains specific information related to implementations of the present disclosure. The drawings and their accompanying detailed disclosure are merely directed to implementations. However, the present disclosure is not limited to these implementations. Other variations and implementations of the present disclosure will be obvious to those skilled in the art.

The phrases "in one implementation," or "in some implementations," may each refer to one or more of the same or different implementations. The term "coupled" is defined as connected whether directly or indirectly through intervening components and is not necessarily limited to physical connections. The expression "at least one of A, B and C" or "at least one of the following: A, B and C" means "only A, or only B, or only C, or any combination of A, B and C."

The terms "system" and "network" may be used interchangeably.

For the purposes of explanation and non-limitation, specific details such as functional entities, techniques, protocols, and standards are set forth for providing an understanding of the present disclosure. In other examples, detailed disclosure of well-known methods, technologies, systems, and architectures are omitted so as not to obscure the present disclosure with unnecessary details.

Persons skilled in the art will immediately recognize that any network function(s) or algorithm(s) disclosed may be implemented by hardware, software or a combination of software and hardware. Disclosed functions may correspond to modules which may be software, hardware, firmware, or any combination thereof.

A software implementation may include machine- and/or computer- readable and/or executable instructions stored on a machine- and/or computer-readable medium such as memory or other types of storage devices. One or more microprocessors or general-purpose computers with communication processing capability may be programmed with corresponding executable instructions and perform the disclosed network function(s) or algorithm(s).

The microprocessors or general-purpose computers may include Applications Specific Integrated Circuitry (ASIC), programmable logic arrays, and/or using one or more Digital Signal Processor (DSPs). Although some of the disclosed implementations are oriented to software installed and executing on computer hardware, alternative implementations implemented as firmware or as hardware or as a combination of hardware and software are well within the scope of the present disclosure. The computer readable medium includes but is not limited to Random Access Memory (RAM), Read Only Memory (ROM), Erasable Programmable Read-Only Memory (EPROM), Electrically Erasable Programmable Read-Only Memory (EEPROM), flash memory, Compact Disc Read-Only Memory (CD-ROM), magnetic cassettes, magnetic tape, magnetic disk storage, or any other equivalent medium capable of storing computer-readable instructions.

Verification of attestation evidence and appraisal of attestation claims is a complex task. At minimum, appraisal requires the verifier to compare the attestation claims against trusted reference claims. The collection of the reference claims then becomes a major task, as the number of trusted firmware and software images and device identifiers can be very large. The reference values may be provided by multiple stakeholders: device manufacturers, firmware vendors, operating system (OS) vendors, etc. The verifier must also have an understanding of the semantics of the reference values. For example, if the reference value H is the hash of the binary code of a trusted operating system (OS) kernel, and the evidence indicates that the device is running a virtualized OS with hash H, can the operating system be trusted? An OS that is secure on a physical machine may not be secure when it runs in a virtual machine. The verifier also needs to know whether the combination of all claims in the evidence is approved for a particular use. This may require a system integrator to provide aggregated reference values, describing the combinations of firmware, software and device identities that is deemed secure for a particular purpose. This further increases the number of reference values and the complexity of provisioning them to verifiers. Yet another problem is that different attesting environments, such as different secure execution environment hardware (Intel software guard extensions (SGX), AMD secure encrypted virtualisation (SEV), Arm confidential compute architecture (CCA), Trusted Platform Modules, etc.) all use different formats for attestation claims, evidence and reference values. It is difficult and complex for a single verifier to be able to process all these formats.

In practice, it is often necessary to use multiple verifiers to appraise attestation evidence. For example, each stakeholder may provide their own verifier as an online service. The main verifier would then ask each verifier to verify a subset of the attestation evidence, and then produce a final attestation result based on the results from the sub-verifiers.

When multiple verifiers are used to verify parts of the same attestation evidence, care must be taken to reveal to each verifier only the claims that it is able to verify and not more. Revealing more than the minimum necessary subset of the claims may violate privacy. For example, a verifier provided by one company may be able to check a device identifier and write into the attestation result whether the device is a genuine device or not, but a verifier provided by a third-party application vendor should not be allowed to find out the exact device identity.

A cryptographic hash function takes as input a variable-length sequence of bits and produces a fixed-length message representative called a digest. Cryptographic hash functions are designed so that it is difficult to find two inputs that map to the same digest (collision resistance), and given a digest, it is difficult to find a message that maps to this particular digest (pre-image resistance). Common hash functions, like secure hashing algorithm (SHA)-256 operate on blocks of the input data. For example, SHA-256 operates on 512-bit blocks. It is noted that although there is reference herein to the use of SHA-256 as hash function, as it is the most widely used hash, other cryptographic hash functions can be used. SHA-256 has a state of 256 bits. Before hashing any data, an initialisation (init) operation is performed to initialize the state with a constant value. Then, each 512-bit block of the input is processed one by one by the update operation, which updates the state based on the previous state and the processed block. When all blocks have been processed, a finish operation is performed to pad the final (possibly incomplete) block. Before the finish operation, the state is called non-finalized. After the finish operation, the state is called finalized. A finalized state can no longer be updated with new data, instead a new init operation must be performed, which resets the state.

To protect attestation messages such as evidence, digital signatures are often used. A signature is constructed by first hashing the message and then performing an asymmetric cryptographic operation on the hash. For example, the data may first be hashed with SHA-256 and then a set of elliptic curve and other operations, chosen according to a private key (or public key, in case of verification), could be applied to the hash to produce a signature. This is, for example, how one of the most common signature algorithms, the Elliptic Curve Digital Signature Algorithm (ECDSA)-SHA256 works.

Conventional methods for providing attestation privacy all require a large number of extra cryptographic operations. Thus, the conventional methods do not scale well when the number of devices involved in RA is large. In practice, attestation may be used for smartphones, other personal and even small IOT devices, meaning that the number of involved devices and the amount of evidence appraisal processes can quickly reach billions, making conventional methods impractical. For example, a large amount of extra asymmetric-key cryptographic operations may be required compared to methods that provide no privacy when multiple verifiers are used. The main reason for this is that new asymmetric operations are needed to protect the evidence, since separate protections are required for each verifier. This is problematic especially on the attester side, as attesters may be resource constrained devices.

According to an example, there is provided a method that provides attestation privacy without needing any extra per-verifier asymmetric cryptographic operations on the attester side. The appraisal of remote attestation evidence by multiple verifiers can be provided, such that the privacy of the attester is preserved to the largest possible extent and only a minimal amount of information about the attester is revealed to each verifier. According to an example, each verifier can, in turn, process a subset of the attestation claims and replace the processed claim set in the evidence with a non-finished hash state of the thus-far processed claims.

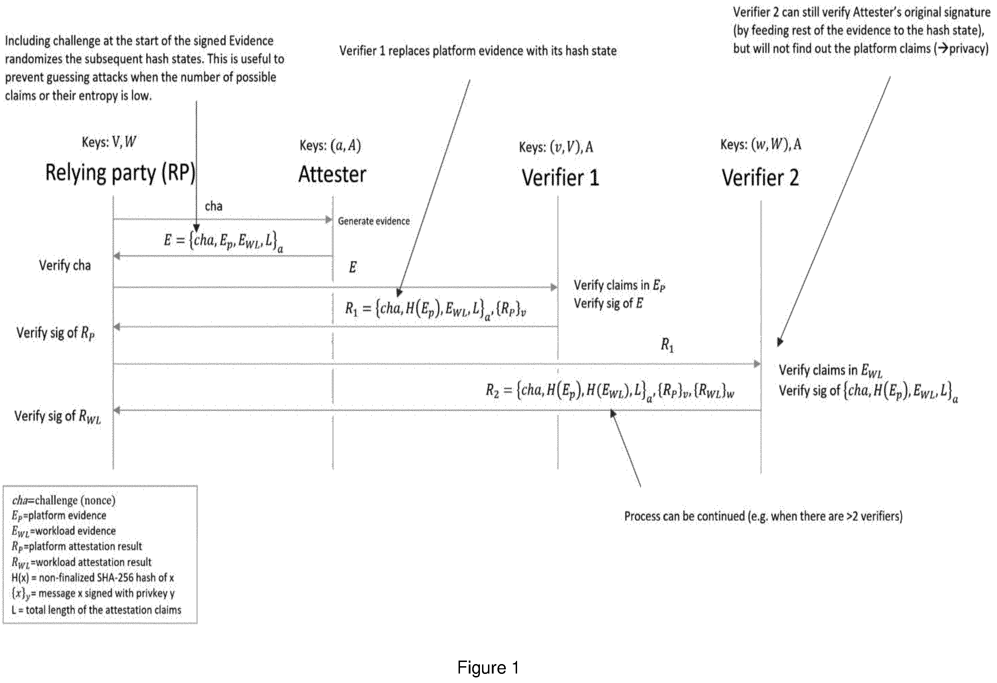

Figure 1 is a schematic representation of a message flow comprising a pair of verifiers, according to an example. The example of figure 1 illustrates an implementation that can be provided as part of an attestation protocol, for example.

In the example of the figure 1, the Relying Party (RP) starts the process. Note that in other implementations of the protocol, another entity may perform the actions of the RP. For example, the Attester may perform a subset of the actions, except for the result verifications. Or a main verifier could perform the actions of the RP, except for the verification of the final total result.

The RP creates a random challenge (cha) and sends it to the Attester. The purpose of the challenge is to randomize the subsequent hash states computed when hashing the claims during signature verification. This is useful to prevent guessing attacks when the number of claims is very low. The Attester generates attestation evidence, E. The evidence, E, comprises the said challenge, and one or more sets of attestation claims. Each set is intended for a single Verifier. Finally, the evidence contains the total length of the attestation claims. After receiving the evidence, the RP sends it to the first Verifier (Verifier 1).

According to an example, the following process then occurs:
The first Verifier, Verifier 1, appraises the first set of claims, hashes them, and inserts the resulting non-finalized hash state into the evidence in place of the first set of claims. That is, the first verifier can verify one or more unverified attestation claims from a set of multiple unverified attestation claims to generate a first verified attestation claim for the platform in question, and generate a first hash value based on the first verified attestation claim for the platform, wherein the first hash value comprises a representation of a state of a cryptographic hash algorithm. This allows the next Verifier (e.g., Verifier 2 in the example of figure 1) to continue the hash operation using the non-finalized state without needing to know the first set of claims. This provides a significant privacy improvement over typical processes. That is, the second Verifier (Verifier 2) can start a signature verification process not from the init operation of the hash function, but using the update operation, hashing the rest of the evidence, and then applying the asymmetric cryptography operation such as ECDSA verification on the hash. Thus, Verifier 2 is still able to verify the original signature produced by the attester without knowing all of the signed data. It is this step that provides the performance improvement compared to conventional methods. After verifying the signature and appraising the first set of claims, the first (or second) Verifier produces an attestation sub-result based on the first set of claims. The sub-result may be signed by the verifier. The sub-result is sent to the relying party. The relying party may, at this point, check the signature of the sub-result. This is repeated for every Verifier that is needed to verify the evidence. Each verifier verifies a subset of the claims and produces a sub-result. At the end, the relying party combines the sub-results to a total attestation result.

It should be noted that the total length of all claims in the evidence (L in figure 1) is needed in order to perform the padding needed in the hash finish operation in the final Verifier. Furthermore, the next verifier must always verify the left-most claims or left-most claim set in the evidence, i.e., it processes claims starting from smallest offset in the evidence that points to unverified claims.

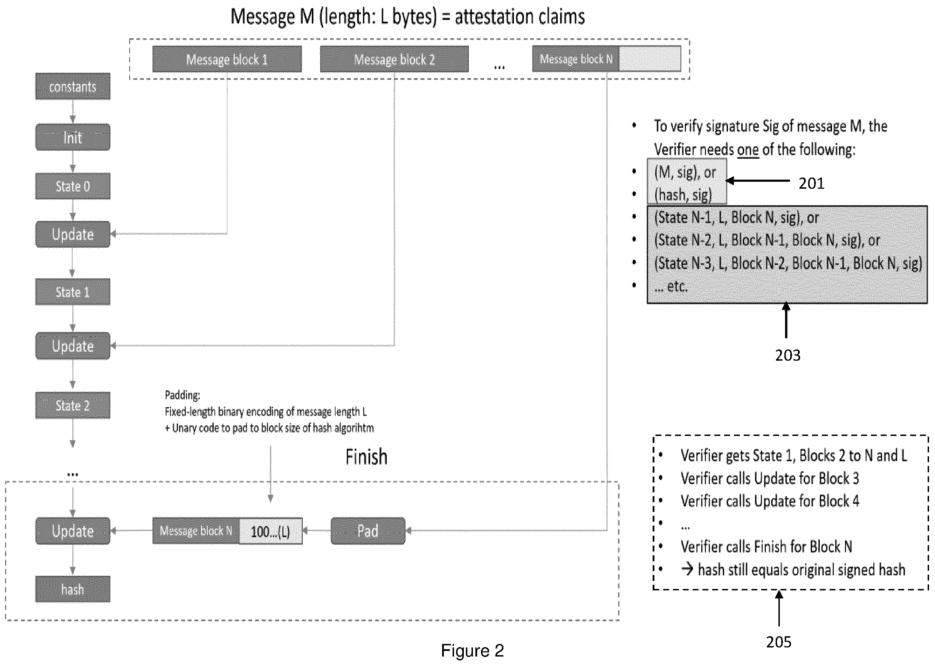

Figure 2 is a schematic representation of a cryptographic process showing how a hash function operates according to an example. In the example of figure 2, the left side of the figure illustrates the inner workings of a typical hash function (here, SHA-256). The right side illustrates which information a verifier needs about the hash in order to verify its signature. Information required (201) when using a conventional method is shown, as well as information required (203) according to an example. Block 205 shows an exemplary methodology according to an example.

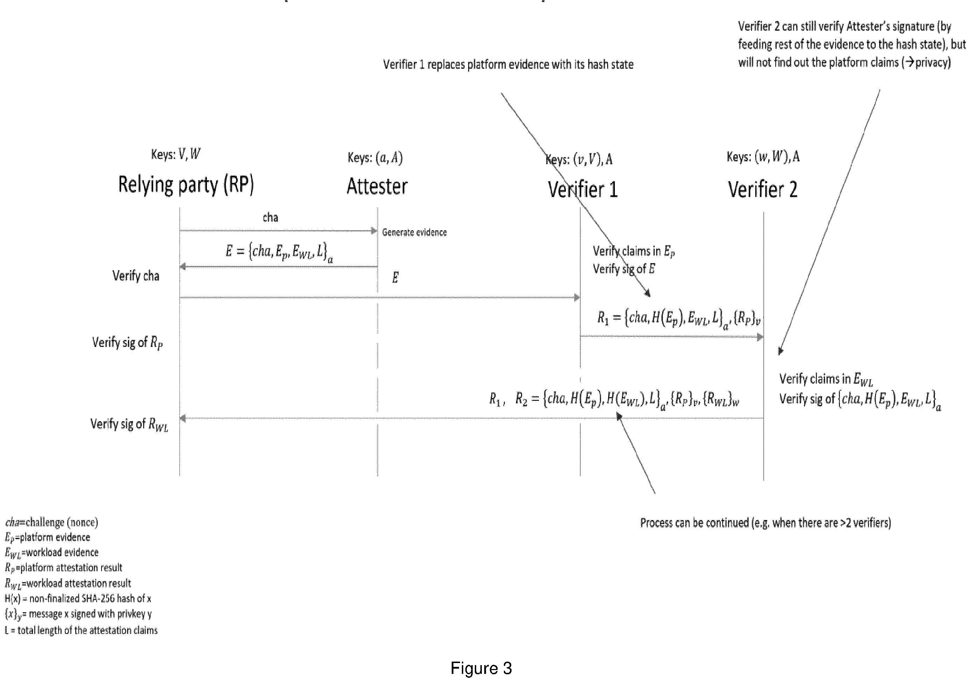

Figure 3 is a schematic representation of a message flow comprising a pair of verifiers, according to an example. The example of figure 3 illustrates an implementation that can be provided as part of an attestation protocol, for example. In the example of figure 2, each Verifier can send evidence and sub-results to the next Verifier. For example, as shown in figure 3, Verifier 1 can send evidence and sub-results to Verifier 2, and so on. Accordingly, the amount of network transmission the relying party needs to perform is reduced, and the relying party does not have to know the network addresses of all the verifiers. It should also be noted that the number of verifiers is not limited; there may be an arbitrary, possibly very large number of verifiers.

Examples in the present disclosure can be provided as procedures, methods, systems or machine-readable instructions, such as any combination of software, hardware, firmware or the like. Such machine-readable instructions may be included on a computer readable storage medium (including but not limited to disc storage, CD-ROM, optical storage, etc.) having computer readable program codes therein or thereon.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The machine-readable instructions may, for example, be executed by a machine or a platform, such as a verification apparatus, an apparatus, a general-purpose computer, a platform comprising user equipment such as a smart device, e.g., a smart phone, a special purpose computer, an embedded processor or processors of other programmable data processing devices to realize the functions described in the description and diagrams. In particular, a processor or processing apparatus may execute the machine-readable instructions. Thus, modules of apparatus (e.g., a module implementing a cryptographic function and/or a hashing function) may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate set etc. The methods and modules may all be performed by a single processor or divided amongst several processors.

Such machine-readable instructions may also be stored in a computer readable storage that can guide the computer or other programmable data processing devices to operate in a specific mode. For example, the instructions may be provided on a non-transitory computer readable storage medium encoded with instructions, executable by a processor.

Further, the teachings herein may be implemented in the form of a computer or software product, such as a non-transitory machine-readable storage medium, the computer software or product being stored in a storage medium and comprising a plurality of instructions, e.g., machine readable instructions, for making a computer device implement the methods recited in the examples of the present disclosure.

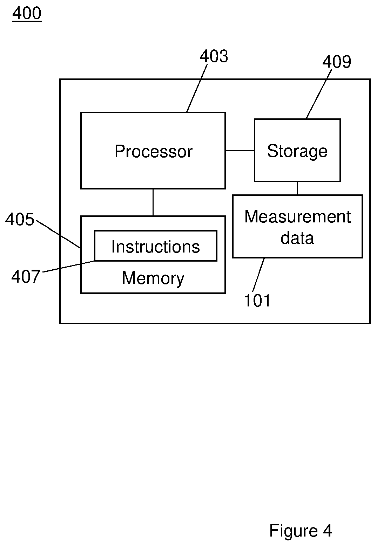

Figure 4 is a schematic representation of a machine according to an example. The machine of figure 4 can be implemented as part of a device as described above with reference to figures 1 to 3, for example. The machine 400 comprises a processor 403, and a memory 405 to store instructions 407, executable by the processor 403. The machine comprises a storage 409 that can be used to store data representing, e.g., hash values, evidence, signatures, cryptographic data etc., as described above. The instructions 407, executable by the processor 403, can cause the machine 400 to receive, from a relying party comprising an entity making a trust decision in relation to the platform on the basis of an attestation result, first evidence comprising a cryptographically signed first set of data, the first set of data comprising a random challenge in the form of a nonce, a first set of multiple unverified attestation claims in relation to the platform, and the total length of the first set of multiple attestation claims, verify one or more unverified attestation claims from the first set of multiple unverified attestation claims to generate a first verified attestation claim for the platform, generate a first hash value based on the first verified attestation claim for the platform, wherein the first hash value comprises a representation of a state of a cryptographic hash algorithm, and generate second evidence comprising the random challenge, a second set of multiple attestation claims in relation to the platform, and the total length of the second set of multiple attestation claims, wherein the second set of multiple attestation claims comprises the first set of multiple unverified attestation claims in which the first hash value is provided in place of the first verified attestation claim.

Accordingly, the machine 400 can implement a method for verifying data representing attestation evidence for a platform.

In some examples, some methods can be performed in a cloud-computing or network-based environment. Cloud-computing environments may provide various services and applications via the Internet. These cloud-based services (e.g., software as a service, platform as a service, infrastructure as a service, etc.) may be accessible through a web browser or other remote interface of the user equipment for example. Various functions described herein may be provided through a remote desktop environment or any other cloud-based computing environment.

While various embodiments have been described and/or illustrated herein in the context of fully functional computing systems, one or more of these exemplary embodiments may be distributed as a program product in a variety of forms, regardless of the particular type of computer-readable-storage media used to actually carry out the distribution. The embodiments disclosed herein may also be implemented using software modules that perform certain tasks. These software modules may include script, batch, or other executable files that may be stored on a computer-readable storage medium or in a computing system. In some embodiments, these software modules may configure a computing system to perform one or more of the exemplary embodiments disclosed herein. In addition, one or more of the modules described herein may transform data, physical devices, and/or representations of physical devices from one form to another.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the protection scope of the claims. The embodiments disclosed herein should be considered in all respects illustrative and not restrictive. Reference should be made to the appended claims and their equivalents in determining the protection scope of the claims.

## Claims

1. A first verification apparatus (400) for verifying data representing attestation evidence for a platform, the first verification apparatus configured to:
receive, from a relying party comprising an entity making a trust decision in relation to the platform on the basis of an attestation result, first evidence comprising a cryptographically signed first set of data, the first set of data comprising a random challenge in the form of a nonce, a first set of multiple unverified attestation claims in relation to the platform, and the total length of the first set of multiple attestation claims;
verify one or more unverified attestation claims from the first set of multiple unverified attestation claims to generate a first verified attestation claim for the platform;
generate a first hash value based on the first verified attestation claim for the platform, wherein the first hash value comprises a representation of a state of a cryptographic hash algorithm; and
generate second evidence comprising the random challenge, a second set of multiple attestation claims in relation to the platform, and the total length of the second set of multiple attestation claims, wherein the second set of multiple attestation claims comprises the first set of multiple unverified attestation claims in which the first hash value is provided in place of the first verified attestation claim.

2. The first verification apparatus (400) as claimed in claim 1, wherein the first verification apparatus is configured to:
select the first unverified attestation claim from the first set of multiple unverified attestation claims by selecting an unverified attestation claim starting from a smallest offset in the first evidence pointing to an unverified attestation claim.

3. The first verification apparatus (400) as claimed in claim 1 or 2, wherein the first verification apparatus possesses a public cryptographic key of the relying party and an attesting entity, and/or a public cryptographic key of an attesting entity or a trust anchor for the public key of the attesting entity.

4. The first verification apparatus (400) as claimed in any preceding claim, wherein the first verification apparatus is configured to verify the cryptographic signature of the first evidence.

5. The first verification apparatus (400) as claimed in any preceding claim, wherein the first verification apparatus is configured to:
generate the first hash value by applying a cryptographic hash function configured to incrementally generate hash values.

6. An apparatus for a relying party, wherein the relying party comprises an entity making a trust decision in relation to a platform on the basis of an attestation result, the apparatus configured to:
transmit a challenge to an attestation apparatus, wherein the challenge comprises a nonce;
receive, from the attestation apparatus, an attestation result comprising first evidence comprising a cryptographically signed first set of data, the first set of data comprising the random challenge, a first set of multiple unverified attestation claims in relation to the platform, and the total length of the first set of multiple attestation claims;
transmit the first evidence to a first verification apparatus;
receive, from the first verification apparatus or a second verification apparatus, a set of partial attestation results representing verified claims of the first set of multiple unverified attestation claims in relation to the platform; and
combine the set of partial attestation results to form an attestation result for the platform.

7. The apparatus as claimed in claim 6, wherein the apparatus is configured to:
verify a signature of the set of partial attestation results.

8. The apparatus as claimed in claim 6 or 7, wherein the apparatus is configured to:
transmit the first evidence to a second verification apparatus.

9. The apparatus as claimed in any of claims 6 to 8, wherein each unverified attestation claim of the first set of multiple unverified attestation claims is provided for respective different verification apparatuses.

10. A machine-readable storage medium encoded with instructions for verifying data representing attestation evidence for a platform at a first verification apparatus, wherein the first verification apparatus comprises a processor, the instructions executable by the processor, whereby to cause the first verification apparatus to:
receive, from a relying party comprising an entity making a trust decision in relation to the platform on the basis of an attestation result, first evidence comprising a cryptographically signed first set of data, the first set of data comprising a random challenge in the form of a nonce, a first set of multiple unverified attestation claims in relation to the platform, and the total length of the first set of multiple attestation claims;
verify one or more unverified attestation claims from the first set of multiple unverified attestation claims to generate a first verified attestation claim for the platform;
generate a first hash value based on the first verified attestation claim for the platform, wherein the first hash value comprises a representation of a state of a cryptographic hash algorithm; and
generate second evidence comprising the random challenge, a second set of multiple attestation claims in relation to the platform, and the total length of the second set of multiple attestation claims, wherein the second set of multiple attestation claims comprises the first set of multiple unverified attestation claims in which the first hash value is provided in place of the first verified attestation claim.

11. The machine-readable storage medium as claimed in claim 10, encoded with further instructions, whereby to cause the first verification apparatus to:
select the first unverified attestation claim from the first set of multiple unverified attestation claims by selecting an unverified attestation claim starting from a smallest offset in the first evidence pointing to an unverified attestation claim.

12. The machine-readable storage medium as claimed in claim 10 or 11, encoded with further instructions, whereby to cause the first verification apparatus to:
verify the cryptographic signature of the first evidence.

13. The machine-readable storage medium as claimed in any of claims 10 to 12, encoded with further instructions, whereby to cause the first verification apparatus to:
generate the first hash value by applying a cryptographic hash function configured to incrementally generate hash values.

14. The machine-readable storage medium as claimed in claim 10, or any of claims 12 to 13, encoded with further instructions, whereby to cause the first verification apparatus to:
select a first unverified attestation claim from the first set of multiple unverified attestation claims on the basis of a relationship of the first unverified attestation claim to the platform.

15. The machine-readable storage medium as claimed in claim 14, encoded with further instructions, whereby to cause the first verification apparatus to:
determine whether the first unverified attestation claim from the first set of multiple unverified attestation claims relates to a trustworthy configuration.

## Patentansprüche

1. Erste Verifizierungseinrichtung (400) zum Verifizieren von Daten, die einen Attestierungsnachweis für eine Plattform darstellen, wobei die erste Verifizierungseinrichtung konfiguriert ist zum:
Empfangen, von einer vertrauenden Seite, die eine Entität umfasst, die eine Vertrauensentscheidung in Bezug auf die Plattform auf der Basis eines Attestierungsergebnisses trifft, eines ersten Nachweises, der einen kryptografisch signierten ersten Datensatz umfasst, wobei der erste Datensatz eine zufällige Challenge in Form einer Nonce, einen ersten Satz von mehreren unverifizierten Attestierungsansprüchen in Bezug auf die Plattform und die Gesamtlänge des ersten Satzes von mehreren Attestierungsansprüchen umfasst;
Verifizieren eines oder mehrerer unverifizierter Attestierungsansprüche aus dem ersten Satz von mehreren unverifizierten Attestierungsansprüchen, um einen ersten verifizierten Attestierungsanspruch für die Plattform zu erzeugen;
Erzeugen eines ersten Hash-Werts basierend auf dem ersten verifizierten Attestierungsanspruch für die Plattform, wobei der erste Hash-Wert eine Darstellung eines Zustands eines kryptografischen Hash-Algorithmus umfasst; und
Erzeugen eines zweiten Nachweises, der die zufällige Challenge, einen zweiten Satz von mehreren Attestierungsansprüchen in Bezug auf die Plattform und die Gesamtlänge des zweiten Satzes von mehreren Attestierungsansprüchen umfasst, wobei der zweite Satz von mehreren Attestierungsansprüchen den ersten Satz von mehreren unverifizierten Attestierungsansprüchen umfasst, in dem der erste Hash-Wert anstelle des ersten verifizierten Attestierungsanspruchs bereitgestellt wird.

2. Erste Verifizierungseinrichtung (400) nach Anspruch 1, wobei die erste Verifizierungseinrichtung konfiguriert ist zum:
Auswählen des ersten unverifizierten Attestierungsanspruchs aus dem ersten Satz von mehreren unverifizierten Attestierungsansprüchen durch Auswählen eines unverifizierten Attestierungsanspruchs, beginnend bei einer kleinsten Abweichung in dem ersten Nachweis, die auf einen unverifizierten Attestierungsanspruch verweist.

3. Erste Verifizierungseinrichtung (400) nach Anspruch 1 oder 2, wobei die erste Verifizierungseinrichtung einen öffentlichen kryptografischen Schlüssel der vertrauenden Partei und einer attestierenden Entität und/oder einen öffentlichen kryptografischen Schlüssel einer attestierenden Entität oder einen Vertrauensanker für den öffentlichen Schlüssel der attestierenden Entität besitzt.

4. Erste Verifizierungseinrichtung (400) nach einem der vorstehenden Ansprüche, wobei die erste Verifizierungseinrichtung konfiguriert ist, um die kryptografische Signatur des ersten Nachweises zu verifizieren.

5. Erste Verifizierungseinrichtung (400) nach einem der vorstehenden Ansprüche, wobei die erste Verifizierungseinrichtung konfiguriert ist zum:
Erzeugen des ersten Hash-Werts durch Anwenden einer kryptografischen Hash-Funktion, die konfiguriert ist, um inkrementell Hash-Werte zu erzeugen.

6. Einrichtung für eine vertrauende Seite, wobei die vertrauende Seite eine Entität umfasst, die eine Vertrauensentscheidung in Bezug auf eine Plattform auf der Basis eines Attestierungsergebnisses trifft, wobei die Einrichtung konfiguriert ist zum:
Übertragen einer Challenge an eine Attestierungseinrichtung, wobei die Challenge eine Nonce umfasst;
Empfangen, von der Attestierungseinrichtung, eines Attestierungsergebnisses, das einen ersten Nachweis umfasst, der einen kryptografisch signierten ersten Datensatz umfasst, wobei der erste Datensatz die zufällige Challenge, einen ersten Satz von mehreren unverifizierten Attestierungsansprüchen in Bezug auf die Plattform und die Gesamtlänge des ersten Satzes von mehreren Attestierungsansprüchen umfasst;
Übertragen des ersten Nachweises an eine erste Verifizierungseinrichtung;
Empfangen, von der ersten Verifizierungseinrichtung oder einer zweiten Verifizierungseinrichtung, eines Satzes von Teilattestierungsergebnissen, die verifizierte Ansprüche des ersten Satzes von mehreren unverifizierten Attestierungsansprüchen in Bezug auf die Plattform darstellen; und
Kombinieren des Satzes von Teilattestierungsergebnissen, um ein Attestierungsergebnis für die Plattform zu bilden.

7. Einrichtung nach Anspruch 6, wobei die Einrichtung konfiguriert ist zum:
Verifizieren einer Signatur des Satzes von Teilattestierungsergebnissen.

8. Einrichtung nach Anspruch 6 oder 7, wobei die Einrichtung konfiguriert ist zum:
Übertragen des ersten Nachweises an eine zweite Verifizierungseinrichtung.

9. Einrichtung nach einem der Ansprüche 6 bis 8, wobei jeder unverifizierte Attestierungsanspruch des ersten Satzes von mehreren unverifizierten Attestierungsansprüchen für jeweilige unterschiedliche Verifizierungseinrichtungen bereitgestellt wird.

10. Maschinenlesbares Speichermedium, das mit Anweisungen zur Verifizierung von Daten codiert ist, die einen Attestierungsnachweis für eine Plattform an einer ersten Verifizierungseinrichtung darstellen, wobei die erste Verifizierungseinrichtung einen Prozessor umfasst, wobei die Anweisungen durch den Prozessor ausführbar sind, um dadurch die erste Verifizierungseinrichtung zu veranlassen zum:
Empfangen, von einer vertrauenden Seite, die eine Entität umfasst, die eine Vertrauensentscheidung in Bezug auf die Plattform auf der Basis eines Attestierungsergebnisses trifft, eines ersten Nachweises, der einen kryptografisch signierten ersten Datensatz umfasst, wobei der erste Datensatz eine zufällige Challenge in Form einer Nonce, einen ersten Satz von mehreren unverifizierten Attestierungsansprüchen in Bezug auf die Plattform und die Gesamtlänge des ersten Satzes von mehreren Attestierungsansprüchen umfasst;
Verifizieren eines oder mehrerer unverifizierter Attestierungsansprüche aus dem ersten Satz von mehreren unverifizierten Attestierungsansprüchen, um einen ersten verifizierten Attestierungsanspruch für die Plattform zu erzeugen;
Erzeugen eines ersten Hash-Werts basierend auf dem ersten verifizierten Attestierungsanspruch für die Plattform, wobei der erste Hash-Wert eine Darstellung eines Zustands eines kryptografischen Hash-Algorithmus umfasst; und
Erzeugen eines zweiten Nachweises, der die zufällige Challenge, einen zweiten Satz von mehreren Attestierungsansprüchen in Bezug auf die Plattform und die Gesamtlänge des zweiten Satzes von mehreren Attestierungsansprüchen umfasst, wobei der zweite Satz von mehreren Attestierungsansprüchen den ersten Satz von mehreren unverifizierten Attestierungsansprüchen umfasst, in dem der erste Hash-Wert anstelle des ersten verifizierten Attestierungsanspruchs bereitgestellt wird.

11. Maschinenlesbares Speichermedium nach Anspruch 10, das mit weiteren Anweisungen codiert ist, um dadurch die erste Verifizierungseinrichtung zu veranlassen zum:
Auswählen des ersten unverifizierten Attestierungsanspruchs aus dem ersten Satz von mehreren unverifizierten Attestierungsansprüchen durch Auswählen eines unverifizierten Attestierungsanspruchs, beginnend bei einer kleinsten Abweichung in dem ersten Nachweis, die auf einen unverifizierten Attestierungsanspruch verweist.

12. Maschinenlesbares Speichermedium nach Anspruch 10 oder 11, das mit weiteren Anweisungen codiert ist, um dadurch die erste Verifizierungseinrichtung zu veranlassen zum:
Verifizieren der kryptografischen Signatur des ersten Nachweises.

13. Maschinenlesbares Speichermedium nach einem der Ansprüche 10 bis 12, das mit weiteren Anweisungen codiert ist, um die erste Verifizierungseinrichtung zu veranlassen zum:
Erzeugen des ersten Hash-Werts durch Anwenden einer kryptografischen Hash-Funktion, die konfiguriert ist, um inkrementell Hash-Werte zu erzeugen.

14. Maschinenlesbares Speichermedium nach Anspruch 10 oder einem der Ansprüche 12 bis 13, das mit weiteren Anweisungen codiert ist, um die erste Verifizierungseinrichtung zu veranlassen zum:
Auswählen eines ersten unverifizierten Attestierungsanspruchs aus dem ersten Satz von mehreren unverifizierten Attestierungsansprüchen auf der Basis einer Beziehung des ersten unverifizierten Attestierungsanspruchs zu der Plattform.

15. Maschinenlesbares Speichermedium nach Anspruch 14, das mit weiteren Anweisungen codiert ist, um dadurch die erste Verifizierungseinrichtung zu veranlassen zum:
Bestimmen, ob sich der erste unverifizierte Attestierungsanspruch aus dem ersten Satz von mehreren unverifizierten Attestierungsansprüchen auf eine vertrauenswürdige Konfiguration bezieht.

## Revendications

1. Premier appareil de vérification (400) permettant de vérifier des données représentant une preuve d'attestation pour une plateforme, le premier appareil de vérification étant configuré pour :
recevoir, à partir d'une partie utilisatrice comprenant une entité prenant une décision de confiance par rapport à la plateforme sur la base d'un résultat d'attestation, une première preuve comprenant un premier ensemble de données signé de manière cryptographique, le premier ensemble de données comprenant un défi aléatoire sous la forme d'un nonce, un premier ensemble de multiples revendications d'attestation non vérifiées par rapport à la plateforme, et la longueur totale du premier ensemble de multiples revendications d'attestation ;
vérifier une ou plusieurs revendications d'attestation non vérifiées à partir du premier ensemble de multiples revendications d'attestation non vérifiées afin de générer une première revendication d'attestation vérifiée pour la plateforme ;
générer une première valeur de hachage sur la base de la première revendication d'attestation vérifiée pour la plateforme, dans lequel la première valeur de hachage comprend une représentation d'un état d'un algorithme de hachage cryptographique ; et
générer une seconde preuve comprenant le défi aléatoire, un second ensemble de multiples revendications d'attestation par rapport à la plateforme, et la longueur totale du second ensemble de multiples revendications d'attestation, dans lequel le second ensemble de multiples revendications d'attestation comprend le premier ensemble de multiples revendications d'attestation non vérifiées dans lequel la première valeur de hachage est fournie à la place de la première revendication d'attestation vérifiée.

2. Premier appareil de vérification (400) selon la revendication 1, dans lequel le premier appareil de vérification est configuré pour :
sélectionner la première revendication d'attestation non vérifiée à partir du premier ensemble de multiples revendications d'attestation non vérifiées en sélectionnant une revendication d'attestation non vérifiée en partant d'un décalage le plus petit dans la première preuve pointant vers une revendication d'attestation non vérifiée.

3. Premier appareil de vérification (400) selon la revendication 1 ou 2, dans lequel le premier appareil de vérification possède une clé cryptographique publique de la partie utilisatrice et une entité d'attestation, et/ou une clé cryptographique publique d'une entité d'attestation ou un ancrage de confiance pour la clé publique de l'entité d'attestation.

4. Premier appareil de vérification (400) selon l'une quelconque revendication précédente, dans lequel le premier appareil de vérification est configuré pour vérifier la signature cryptographique de la première preuve.

5. Premier appareil de vérification (400) selon l'une quelconque revendication précédente, dans lequel le premier appareil de vérification est configuré pour :
générer la première valeur de hachage en appliquant une fonction de hachage cryptographique configurée pour générer de manière incrémentielle des valeurs de hachage.

6. Appareil pour une partie utilisatrice, dans lequel la partie utilisatrice comprend une entité prenant une décision de confiance par rapport à une plateforme sur la base d'un résultat d'attestation, l'appareil étant configuré pour :
transmettre un défi à un appareil d'attestation, dans lequel le défi comprend un nonce ;
recevoir, à partir de l'appareil d'attestation, un résultat d'attestation comprenant une première preuve comprenant un premier ensemble de données signé de manière cryptographique, le premier ensemble de données comprenant le défi aléatoire, un premier ensemble de multiples revendications d'attestation non vérifiées par rapport à la plateforme, et la longueur totale du premier ensemble de multiples revendications d'attestation ;
transmettre la première preuve à un premier appareil de vérification ;
recevoir, à partir du premier appareil de vérification ou d'un second appareil de vérification, un ensemble de résultats d'attestation partiels représentant des revendications vérifiées du premier ensemble de multiples revendications d'attestation non vérifiées par rapport à la plateforme ; et
combiner l'ensemble de résultats d'attestation partiels pour former un résultat d'attestation pour la plateforme.

7. Appareil selon la revendication 6, dans lequel l'appareil est configuré pour :
vérifier une signature de l'ensemble de résultats d'attestation partiels.

8. Appareil selon la revendication 6 ou 7, dans lequel l'appareil est configuré pour :
transmettre la première preuve à un second appareil de vérification.

9. Appareil selon l'une quelconque des revendications 6 à 8, dans lequel chaque revendication d'attestation non vérifiée du premier ensemble de multiples revendications d'attestation non vérifiées est fournie pour des appareils de vérification différents respectifs.

10. Support de stockage lisible par machine codé avec des instructions permettant de vérifier des données représentant une preuve d'attestation pour une plate-forme au niveau d'un premier appareil de vérification, dans lequel le premier appareil de vérification comprend un processeur, les instructions pouvant être exécutées par le processeur, de manière à amener le premier appareil de vérification à :
recevoir, à partir d'une partie utilisatrice comprenant une entité prenant une décision de confiance par rapport à la plateforme sur la base d'un résultat d'attestation, une première preuve comprenant un premier ensemble de données signé de manière cryptographique, le premier ensemble de données comprenant un défi aléatoire sous la forme d'un nonce, un premier ensemble de multiples revendications d'attestation non vérifiées par rapport à la plateforme, et la longueur totale du premier ensemble de multiples revendications d'attestation ;
vérifier une ou plusieurs revendications d'attestation non vérifiées à partir du premier ensemble de multiples revendications d'attestation non vérifiées afin de générer une première revendication d'attestation vérifiée pour la plateforme ;
générer une première valeur de hachage sur la base de la première revendication d'attestation vérifiée pour la plateforme, dans lequel la première valeur de hachage comprend une représentation d'un état d'un algorithme de hachage cryptographique ; et
générer une seconde preuve comprenant le défi aléatoire, un second ensemble de multiples revendications d'attestation par rapport à la plateforme, et la longueur totale du second ensemble de multiples revendications d'attestation, dans lequel le second ensemble de multiples revendications d'attestation comprend le premier ensemble de multiples revendications d'attestation non vérifiées dans lequel la première valeur de hachage est fournie à la place de la première revendication d'attestation vérifiée.

11. Support de stockage lisible par machine selon la revendication 10, codé avec des instructions supplémentaires, de manière à amener le premier appareil de vérification à :
sélectionner la première revendication d'attestation non vérifiée à partir du premier ensemble de multiples revendications d'attestation non vérifiées en sélectionnant une revendication d'attestation non vérifiée en partant d'un décalage le plus petit dans la première preuve pointant vers une revendication d'attestation non vérifiée.

12. Support de stockage lisible par machine selon la revendication 10 ou 11, codé avec des instructions supplémentaires, de manière à amener le premier appareil de vérification à :
vérifier la signature cryptographique de la première preuve.

13. Support de stockage lisible par machine selon l'une quelconque des revendications 10 à 12, codé avec des instructions supplémentaires, de manière à amener le premier appareil de vérification à :
générer la première valeur de hachage en appliquant une fonction de hachage cryptographique configurée pour générer de manière incrémentielle des valeurs de hachage.

14. Support de stockage lisible par machine selon la revendication 10, ou l'une quelconque des revendications 12 à 13, codé avec des instructions supplémentaires, de manière à amener le premier appareil de vérification à :
sélectionner une première revendication d'attestation non vérifiée à partir du premier ensemble de multiples revendications d'attestation non vérifiées sur la base d'une relation entre la première revendication d'attestation non vérifiée et la plateforme.

15. Support de stockage lisible par machine selon la revendication 14, codé avec des instructions supplémentaires, de manière à amener le premier appareil de vérification à :
déterminer si la première revendication d'attestation non vérifiée du premier ensemble de multiples revendications d'attestation non vérifiées se rapporte à une configuration digne de confiance.
